# EUROPÄISCHE PATENTANMELDUNG

(11) **EP 2 259 049 A1**
(43) Veröffentlichungstag der Anmeldung: **08.12.2010**
(21) Anmeldenummer: 10164648.7
(22) Anmeldetag: 01.06.2010
(51) Int. Cl.: G01N 21/64, G01N 21/03, G01N 1/42

(54) **Verfahren und Messvorrichtung zur qualitativen und quantitativen Analyse von Körperflüssigkeiten**

(30) Priorität: 02.06.2009 DE 102009026651
(71) Anmelder: Großmann, Kay, 01465 Dresden (DE); Trepte, Paul, 01127 Dresden (DE)
(72) Erfinder: Großmann, Kay, 01465 Dresden (DE); Trepte, Paul, 01127 Dresden (DE)
(74) Vertreter: Sperling, Thomas

(57) **Zusammenfassung**

Die Erfindung betrifft ein Verfahren zur qualitativen und quantitativen Analyse von Körperflüssigkeiten, insbesondere von Blut, Urin oder Schweiß, wobei zur Untersuchung der Körperflüssigkeiten fluoreszenzspektroskopische Methoden eingesetzt werden, mit den Verfahrensschritten a)-e):
a) Temperierung der Körperflüssigkeitsprobe (5) bei Temperaturen zwischen 200 K und 4 K in einem Kryostat (3);
b) Bestrahlung und Anregung der Körperflüssigkeitsprobe (5) bei Temperaturen zwischen 200 K und 4 K, wobei der Kryostat (3) sowohl die Funktion der Temperatursteuerung der Körperflüssigkeitsprobe (5) als auch die Funktion einer Probenhalterung (7) und einer Probenmesszelle (7) erfüllt, indem die Probenmesszelle (7) im Kryostat (3) angeordnet und durch eine Kryostatenwandung (10) nach außen hin abgeschlossen ist und dabei direkt mit einem Wärmeübertrager (8) des Kryostaten (3) thermisch kontaktiert;
c) spektrale Zerlegung der entstehenden Fluoreszenzstrahlung der Körperflüssigkeitsprobe (5) in einzelne Fluoreszenzsignale,
d) Detektierung der Fluoreszenzsignale und
e) Gegenüberstellung der gewonnenen Fluoreszenzsignale und von entsprechenden Vergleichsdaten und Auswertung.

## Beschreibung

Die vorliegende Erfindung betrifft ein Verfahren und eine Messvorrichtung zur qualitativen und quantitativen Analyse von Körperflüssigkeiten, insbesondere von Blut, Schweiß und Urin.

Die chemische Zusammensetzung von Körperflüssigkeiten, insbesondere von Blut, Schweiß und Urin und deren Veränderung als Reaktion auf verschiedene Umwelteinflüsse sind in der heutigen Medizin wichtige Charakteristika zur Diagnose verschiedenster Krankheiten. Unter anderem vor dem Hintergrund der weltweit zunehmenden Häufigkeit der Adipositas und der damit verbundenen Erhöhung der Wahrscheinlichkeit der Erkrankung an schwerwiegenden Krankheiten, wie Diabetes, Herzinfarkt und anderen Herz-Kreislauferkrankungen, rückt eine umfangreiche, hoch empfindliche und einfache Methode zur Untersuchung von verschiedenen Bestandteilen von Körperflüssigkeiten, insbesondere von Blutbestandteilen, welche diese Krankheiten früh indikatieren, verstärkt in den Blickpunkt. Allein Diabetes mellitus ist zu einer weltweit verbreiteten Massenerkrankung geworden. Die "International Diabetes Ferderation" spricht von der Epidemie des 21. Jahrhunderts **(Diabetes out of control, Pressemitteilung vom 04. Dezember 2006).** Laut der **UN-Resolution on Diabetes** (www.unitefordiabetes.org/campaign/resolution.html) wird Diabetes mellitus als einzige nicht ansteckende Erkrankung auf einer Ebene mit infektiösen Erkrankungen wie Tuberkulose, Malaria oder HIV geführt. Gegenwärtig wird davon ausgegangen, dass etwa 246 Millionen Menschen weltweit an Diabetes erkrankt sind. Laut der ersten Vorhersageschätzungen wird erwartet, dass diese Zahl in den Jahren bis 2025 auf 380 Millionen ansteigt. In Anbetracht des drastischen Zuwachses an Diabetes-Erkrankungen und der fehlenden Möglichkeit, Diabetes zu heilen, bleibt nur, die Bemühungen um frühzeitige Erkennung des Typ-2-Diabetes zu verstärken und somit die Erkrankung in seiner Entstehung zu verhindern. Um jedoch einer Diabeteserkrankung rechtzeitig vorbeugen zu können, ist es notwendig, Personen mit erhöhtem Erkrankungsrisiko im diagnosefreien Intervall oder vorher zu identifizieren. Als pragmatischer Lösungsansatz bietet sich hier der FINDRISC (FINish Diabetes Rlsc SCore)-Risiko-Fragebogen (nach Lindstrom J. und Tuomilehto J.: The Diabetes Risk Score: A practical tool to predict type 2 diabetes risk. Diabetes Care, 2003; 26 (3): 725 bis 731**)** an. Dieser Ansatz bietet jedoch nur Risikoabschätzungen für die Erkrankung und keine medizinischen Details. Medizinisch wird Typ-2-Diabetes traditionell durch den Nachweis von erhöhten Glukosespiegeln im Blut, der Hyperglykämie, diagnostiziert. Herkömmliche Testverfahren für Typ-2-Diabetes identifizieren eine Veränderung des Blutzuckerspiegels jedoch erst in einem sehr fortgeschrittenen Zustand der Erkrankung. Der Nachweis von subhyperglykämischen Glukosespiegeln ist hier ohne Zuhilfenahme von weiteren Diabetes-Typ-2-Indikatoren nicht ausreichend, um auf ein erhöhtes Erkrankungsrisiko des Patienten zu schließen. Eine Früherkennung des erhöhten Risikos zur Entwicklung einer Insulinresistenz oder von Typ-2-Diabetes ist somit möglich, wenn
- der gemessene Blutzuckerwert ein erhöhter Glukosespiegel ist,
- gleichzeitig weitere Indikatoren, wie zum Beispiel das Vorliegen von diabetischer Dyslipidämie, das heißt erhöhten Blutfettwerten, bestimmt werden.
Stark erhöhte Blutfettwerte bei Vorliegen einer Hyperlipidämie tragen zu Bluthochdruck, Herzerkrankung und Schlaganfall bei, wie in der US 6,127,138 A beschrieben. Deshalb wird zur Diagnose von kardiovaskulären Krankheiten, wie beispielsweise konorarer Herzerkrankung, routinemäßig der Blutcholesterinspiegel analysiert. Dabei werden der Gesamtcholesteringehalt sowie die Plasmatriglyceridspiegel gemessen. Zudem werden oftmals die Spiegel der Haupt-Lipoprotein-Bestandteile von Cholesterin untersucht. Eine Methode, welche es erlaubt, mehrere verschiedene Blutbestandteile parallel nebeneinander zu untersuchen, wird in den US-Patentschriften US 4,933,844 A und US 5,343,389 A dargestellt. Dabei sollen die verschiedenen Bestandteile von Blutplasma und Blutserum mit Hilfe der ¹H-NMR-Spektroskopie auf Konzentration bestimmt werden. Vorteil dieses Verfahrens ist neben der parallelen Analyse mehrerer Bestandteile die hohe Empfindlichkeit der NMR-Analyse bezogen auf die Blutbestandteile, wie aus der DE 600 26 287 T2 hervorgeht. Als nachteilig sind hier die Komplexität und Kostenintensität des NMR-Gerätes zu nennen. Diese Kriterien bewirken, dass es für Allgemeinmediziner nicht oder kaum möglich ist, Blutuntersuchungen, die eine frühzeitige Erkennung von Diabetes und Hyperlipidämie zulassen, vor Ort, das heißt in der eigenen Praxis, durchzuführen. Die US 5,341,805 A beschreibt eine Methode zur Bestimmung der Glukosekonzentration in Blut mit Hilfe der Fluoreszenzspektroskopie. Bei dieser Methode wird das Blut mit Licht der Wellenlänge 308 nm angeregt und die resultierende Fluoreszenz wird spektral zerlegt aufgetragen. Aufgrund des Verhältnisses der charakteristischen Glukosebanden im Spektrum sollen hier Rückschlüsse auf die Konzentration der Glukose im Blut bestimmt werden. Die Sensitivität dieser Messung, bezogen auf die Glukosekonzentration, lässt jedoch sehr zu wünschen übrig. Der Nachweis von weiteren wichtigen Indikatoren, wie beispielsweise den Fettanteilen, ist mit dieser Methode jedoch nicht bekannt.

Umfangreiche Blutanalysen, welche einen genauen Überblick über die chemische und mengenmäßige Zusammensetzung des Blutes geben, sind zeitaufwändig und zumeist sehr teuer. Schnelltests zur Blutanalyse, die einfacher handhabbar sind und auch deutlich preiswerter, geben zumeist nur Analysedaten zu einem Blutbestandteil an, wie zum Beispiel der Laktattest oder der Glukosetest. Beispielsweise kann der Patient in der Diabetesdiagnostik mit Hilfe des ärztlichen Schnelltestes lediglich auf seinen Blutzuckerspiegel getestet werden. Wissenschaftlich gesehen ist eine Diabetesdiagnose, die nur aufgrund eines erhöhten Blutzuckerspiegels gestellt wurde, jedoch äußerst zweifelhaft. Zu einer sicheren Diagnose bedarf es des Nachweises von mindestens einem weiteren Krankheitsindikator. Zudem bestimmen die meisten diabetesdiagnostischen Methoden eine Veränderung des Blutzuckers erst bei einem starken Anstieg der Blutzuckerkonzentration, der so genannten Hyperglykämie. Die Hyperglykämie ist jedoch eine sehr späte Entstehungsstufe in der Ereigniskette zu einer voll ausgebrochenen Diabetes. Für Patienten, bei denen eine solche Hyperglykämie nachgewiesen wird, ist es somit kaum noch möglich, den Ausbruch der Diabetes-Typ-2 zu verhindern. Methoden, die eine Erhöhung des Blutzuckerspiegels in einem früheren Stadium detektieren, lassen dagegen oftmals keine eindeutige Abschätzung des Erkrankungsrisikos zu. Diese Methoden bedürfen des Nachweises eines weiteren Krankheitsindikators. Solche Techniken, die den Nachweis von mehreren Krankheitsindikatoren gleichzeitig zulassen, sind jedoch entweder extrem zeitaufwändig oder teuer.

Die der Erfindung zugrunde liegende Aufgabe besteht darin, eine Methode bereitzustellen, die es ermöglicht, mehrere Bestandteile einer Körperflüssigkeit, insbesondere des Blutes, des Schweißes und des Urins parallel zu analysieren. Dabei soll sowohl die Konzentration der jeweiligen Substanz in der Körperflüssigkeit als auch deren Konzentrationsänderung in Abhängigkeit von verschiedenen, auf den Probanden einwirkenden Umgebungsfaktoren gemessen werden. Zusätzlich zu dieser mengenbezogenen Analyse soll die entwickelte Methode die Möglichkeit bieten, den Chemismus und die chemischen Veränderungen bei Belastungen der einzelnen Bestandteile der jeweiligen Körperflüssigkeit darzustellen und zu analysieren. Die gewonnenen Analysedaten für die einzelnen Bestandteile können dazu dienen, Aussagen zu verschiedenen Krankheiten, wie zum Beispiel Diabetes oder mitochondrialen Funktionsstörungen, zu treffen.

Die Aufgabe der Erfindung wird gelöst durch ein Verfahren zur qualitativen und quantitativen Analyse von Körperflüssigkeiten, insbesondere von Blut, Urin oder Schweiß. Dabei werden zur Untersuchung der Körperflüssigkeiten fluoreszenzspektroskopische Methoden eingesetzt. Im ersten Verfahrenschritt a) erfolgt eine Temperierung der Körperflüssigkeitsprobe bei Temperaturen zwischen 200 K und 4 K in einem Kryostat. Im zweiten Schritt b) wird eine Bestrahlung und Anregung der Körperflüssigkeitsprobe mit Licht im UV-, sichtbaren oder infraroten Bereich bei Temperaturen zwischen 200 K und 4 K durchgeführt. Dabei erfüllt der Kryostat sowohl die Funktion der Temperatursteuerung der Körperflüssigkeitsprobe als auch die Funktion einer Probenhalterung und einer Probenmesszelle, indem die Probenmesszelle im Kryostat angeordnet und durch eine Kryostatenwandung nach außen hin abgeschlossen ist, wobei die Probenmesszelle direkt mit einem Wärmeübertrager des Kryostaten thermisch kontaktiert. Die bei der Anregung der Körperflüssigkeitsprobe entstehende Fluoreszenzstrahlung wird in Verfahrensschritt c) spektral in einzelne Fluoreszenzsignale zerlegt, die anschließend in Verfahrensschritt d) detektiert werden. Danach erfolgt in Verfahrensschritt e) eine Gegenüberstellung der gewonnenen Fluoreszenzsignale und von entsprechenden Vergleichsdaten. Diese Gegenüberstellung ermöglicht dann eine Auswertung der Fluoreszenzsignale.

Die hier beschriebene Methode zur qualitativen und quantitativen Analyse von Körperflüssigkeitsbestandteilen ist sowohl für human- als auch für veterinärmedizinische Verwendungen geeignet. Die Erfindung beruht auf der Eigenschaft von Stoffen, Licht bestimmter Wellenlänge zu absorbieren und nach innerer Umwandlung in Form von Fluoreszenz wieder zu emittieren. Die dabei entstehenden Fluoreszenzspektren sind charakteristisch und können unter Einbeziehung von Bandenlagen im Spektrum und der Fluoreszenzlebensdauer zur chemischen Probenanalyse herangezogen werden. Die Eigenschaft eines Stoffes, zu fluoreszieren, ist stark davon abhängig, wie und mit welchen Umgebungsmolekülen der fluoreszierende Stoff wechselwirkt. Solche Wechselwirkungen unterdrücken die Intensität der Fluoreszenz und können bis hin zur kompletten Fluoreszenzlöschung, dem so genannten Quenchen führen. Die beiden wichtigsten Arten von Quenchprozessen sind die dynamische und die statische Fluoreszenzlöschung. Bei der dynamischen, das heißt stoßbedingten Fluoreszenzlöschung wird das angeregte Molekül durch Energieaustausch mit dem Quencher strahlungslos in den Grundzustand überführt, wohingegen beim statistischen Quenching vom Farbstoffmolekül und dem Quencher bereits im Grundzustand ein Komplex gebildet wird, der im angeregten Zustand nicht fluoresziert, sondern ebenfalls strahlungslos in den Grundzustand zurückkehrt. Zur Steigerung der Fluoreszenzintensität des Fluorophors ist es somit notwendig, die unter Normalbedingungen vorherrschenden Quencheffekte zu minimieren. Erfindungsgemäß erfolgt das durch die deutliche Verringerung der Temperatur in der zu untersuchenden Körperflüssigkeitsprobe. Diese Verringerung der Temperatur bewirkt das Abnehmen der Teilchenbeweglichkeit von Fluorophor und Quencher innerhalb der Körperflüssigkeitsprobe und führt somit zu einer gesteigerten Fluoreszenzintensität.

Bei der Untersuchung von Blutproben konnte für "Low Density Lipoprotein" (LDL) bereits ab einer Temperatur von 200 K ein gut auswertbares Fluoreszenzsignal gemessen werden, welches sich auch bei weiterer Verringerung der Temperatur nicht nochmals deutlich veränderte. Vorzugsweise erfolgt jedoch die Temperierung der Körperflüssigkeitsprobe in Verfahrensschritt a) auf Temperaturen zwischen 150 K und 4 K, da dort die meisten Bestandteile von Körperflüssigkeitsproben gut auswertbare Fluoreszenzsignale liefern. Als besonders vorteilhaft erwiesen sich Temperaturen zwischen 100 K und 10 K.

In einer Ausführung des erfindungsgemäßen Verfahrens erfolgt die Bestrahlung und Anregung in Verfahrensschritt b) mit Licht der Wellenlänge 266 nm, vorzugsweise Laserlicht, da die meisten organischen Verbindungen im UV-Bereich eine starke Absorption aufweisen. Verschiedene organische Verbindungen weisen jedoch auch Anregungsmaxima im Vis-Bereich auf. Als Beispiel hierfür ist die Fluoreszenz von Flavin-Adenin-Dinukleotid (FAD) zu nennen. Diese Substanz kann bereits bei Raumtemperatur mit einer Anregungswellenlänge von 450 nm zur Fluoreszenz angeregt werden und emittiert im Bereich von 515 nm. Auch bei dieser Substanz konnte mit Verringerung der Temperatur eine deutliche Steigerung der Intensität des Emissionssignals festgestellt werden. Zudem wurde bei Tieftemperaturstudien an Glukose beobachtet, dass bei Anregung mit einem Femtosekunden gepulsten Laser mit 700 nm (IR-Bereich) ebenfalls eine Glukosefluoreszenz zu generieren war. Diese Fluoreszenz ist jedoch eher einer Mehrphotonenanregung zuzuordnen.

Die Bestrahlung der Körperflüssigkeitsprobe in Verfahrensschritt b) kann jedoch auch mit mehreren unterschiedlichen Wellenlängen zum Teil auch gleichzeitig erfolgen. Alternativ dazu besteht auch die Möglichkeit einer sukzessiven Bestrahlung mit verschiedenen Wellenlängen. Damit können Fluoreszenzen verschiedener Bestandteile der Körperflüssigkeit sowohl gleichzeitig als auch nacheinander angeregt werden.

Als besonderer Vorteil der Erfindung ist es anzusehen, dass unter gegebenen Umständen die Detektion gemäß Verfahrensschritt d) und somit die Messung der Fluoreszenzsignale der verschiedenen Inhaltsstoffe der jeweiligen Körperflüssigkeit gleichzeitig vollzogen werden kann. So können bei der Analyse von Blutbestandteilen mindestens zwei der Indikatoren Blutzuckerspiegel, Insulinspiegel, Spiegel an Lipoproteinen, Spiegel an Homocystein, Langzeitblutzuckerwert (HbA1c) und Gehalt an Fibrinogen gleichzeitig untersucht werden. Insbesondere bei der Untersuchung auf Diabetes-Typ 2 kann die Messung des Blutglukosespiegels gleichzeitig mit der Messung von Blutproteinwerten erfolgen. Bei einer anderen Anwendung im Zusammenhang mit der Analyse von Blutbestandteilen, dem Einsatz des Verfahrens in der Erkennung von mitochondrialen Funktionsstörungen, können für die Bestimmung des Laktat/Pyruvat-Verhältnisses die Fluoreszenzsignale beider Bestandteile, Laktat und Pyruvat, gleichzeitig gemessen werden. Bei der Analyse von Urinbestandteilen in Verbindung mit der Untersuchung auf Diabetes-Typ 2 erfolgen vorzugsweise die Messungen des Zuckergehaltes, des Gehaltes an Aceton und/oder Albumin gleichzeitig.

Die Anregung der tiefgefrorenen Probe erfolgt gemäß einer Ausführung des erfindungsgemäßen Verfahrens mit Licht der Wellenlänge 266 nm. Vereinzelt sind bereits bei einer Messtemperatur von 200 K auswertbare Fluoreszenzen detektierbar, wobei die optimale Kühltemperatur zwischen 150 K und 4 K liegt. In einer Ausführung der Erfindung, bei der Untersuchung des Laktatwertes im Blut, ist mit Verminderung der Temperatur auf 200 K bereits ein deutlich auswertbares Spektrum für Laktat zu erkennen, welches sich bei weiterer Verminderung der Temperatur auf 100 K und 10 K nochmals steigert.

Für die Gegenüberstellung der gewonnenen Fluoreszenzdaten und der Vergleichsdaten in Schritt e) als Vergleichscharakteristika sind bevorzugt die Intensität der Fluoreszenz, die Fläche unterhalb einer Fluoreszenzbande, die Lage der einzelnen Fluoreszenzbandenmaxima im Gesamtspektrum, das Verhältnis verschiedener Bandenmaxima innerhalb eines Spektrums zueinander, die Quantenausbeute der Probe und die Lebensdauer der Fluoreszenz der einzelnen Fluorophore vorgesehen. Dabei wird der durch Tieftemperatur bestimmte Messwert des gewünschten Körperflüssigkeitsbestandteils bevorzugt mit einem vorbestimmten Testkriterium verglichen. Beispielsweise könnte ein zu untersuchender Patient demgemäß als erkrankt oder als Risikopatient identifiziert werden, wenn mehrere der gemessenen Körperflüssigkeitsbestandteile Veränderungen gegenüber dem vorbestimmten Testkriterium aufweisen. Allgemein ist es von Vorteil, wenn das Test- und Referenzkriterium zuvor durch von dieser Methode unabhängige Messungen verifiziert wurde.

Für die Durchführung des oben beschriebenen Verfahrens wird eine Messvorrichtung verwendet, die folgende Bestandteile umfasst:
- eine Lichtquelle für die Anregung der Körperflüssigkeitsprobe,
- einen Kryostaten für das Temperieren der Körperflüssigkeitsprobe,
- einen Fluoreszenzspektrographen für das Zerlegen der gewonnenen Fluoreszenzstrahlung der Körperflüssigkeitsprobe,
- einen Bildgebungsdetektor,
- eine Probenmesszelle, die gleichzeitig als Probenhalterung dient und im Kryostat angeordnet ist, wobei sie durch eine Kryostatenwandung nach außen hin abgeschlossen ist und direkt mit einem Wärmeübertrager des Kryostaten thermisch kontaktiert, und
- eine UV-gängige, temperaturstabile Küvette, mit der die Körperflüssigkeitsprobe in die Probenmesszelle eingeführt wird.

In einer bevorzugten Ausführungsform der Erfindung sind die Lichtquelle, der Kryostat zum Temperieren der Körperflüssigkeitsprobe, der Fluoreszenzpektrograph und der Bildgebungsdetektor innerhalb einer kompakten Messvorrichtung angeordnet. Erfindungsgemäß ist die Probenmesszelle, die gleichzeitig auch als Probenhalterung dient, im Kryostat angeordnet. Der Kryostat erfüllt somit sowohl die Aufgabe der Temperatursteuerung der Körperflüssigkeitsprobe als auch die Aufgabe der Probenmesszelle. Die Kryostatenwandung, welche die Probenmesszelle nach außen hin abschließt und damit einen Wärmeaustausch mit der Lichtquelle und dem Fluoreszenzspektrographen verhindert, wird vorzugsweise durch mindestens zwei um 90° zueinander versetzte UV-gängige Fenster gebildet. In einer alternativen Ausführungsform der Erfindung fungieren die Lichtquelle, der Kryostat zum Tieffrieren der Körperflüssigkeitsprobe, der Fluoreszenzspektrograph und der Bildgebungsdetektor als Summe von Einzelgeräten miteinander.

Bei der Lichtquelle, welche für die Anregung der gefrorenen Körperflüssigkeitsprobe verwendet wird, handelt es sich in einer vorteilhaften Ausführung um eine breitbandige Lichtquelle. Als breitbandige Lichtquellen sind insbesondere Quecksilberdampflampen, Xenon-Hochdruck-Lampen oder Deuterium-Lampen vorgesehen. In einer alternativen Ausführung der erfindungsgemäßen Messvorrichtung kann für die Anregung der gefrorenen Körperflüssigkeitsprobe eine schmalbandige Lichtquelle verwendet werden. Hierbei kommen insbesondere Leuchtdioden (LED)-Lichtquellen oder Laserlichtquellen in Frage, wobei in der Messvorrichtung mehrere Lichtquellen unterschiedlicher Wellenlänge vorgesehen sein können.

Zur Probenkühlung beziehungsweise zum Temperieren kann grundsätzlich jede Art von Kryostaten eingesetzt werden, wobei sich die Handhabung des Gesamtsystems und die Wirtschaftlichkeit bei Kryostaten mit geschlossenem Kältemittelkreislauf gegenüber denen mit offenem Kältemittelkreislauf besser darstellt. Vorzugsweise werden als Kryostaten Refrigerator-Kryostaten, Verdampfer-Kryostaten, Pulse-Tube-Kryostaten oder Sterling-Kühler eingesetzt. Als Kältemittel können zum Beispiel Helium oder Stickstoff fungieren, wobei aufgrund der benötigten sehr niedrigen Temperaturen der Einsatz von Helium als bevorzugt gilt. Gleichzeitig ist aber auch der Einsatz von Kältemittelgemischen denkbar. Vorzugsweise ist die Probenmesszelle direkt mit einem Wärmeübertrager des Kryostaten und einer Heizung zur Regulation der Temperatur der Körperflüssigkeitsprobe verbunden.

Die gewonnenen Daten der Kryofluoreszenzmessung werden gemäß einer bevorzugten Ausführung des erfindungsgemäßen Verfahrens spektral zerlegt und anschließend mit Hilfe eines Bildgebungsdetektors detektiert. Als Bildgebungsdetektor können hierbei verschiedene Photomultiplier (PMT), Pin-Photodioden, Avalanche-Photodioden oder Charge-Coupled-Device-(CCD)-Kameras eingesetzt werden.

Die Vorteile der erfindungsgemäßen Messvorrichtung bestehen vor allem darin, dass sie sowohl für human- als auch für veterinärmedizinische Verwendungen geeignet ist. Des Weiteren ist mit dieser Messvorrichtung und dem Messverfahren die Analyse von mehreren Bestandteilen parallel in nur einem Gerät möglich. Somit besteht auch die Möglichkeit der Analyse von verschiedenen Krankheitsbildern mittels nur eines Verfahrens und eines Gerätes.

Die hohe Empfindlichkeit der Methode ermöglicht eine frühe Erkennung von Veränderungen. Nicht zuletzt ist die Methode auch kostengünstig im Vergleich mit bisher entwickelten Methoden von ähnlicher Effizienz. Ein weiterer Vorteil besteht in der einfachen Handhabung der Methode bei geschlossenem Kältemittelkreislauf. Die Methode ermöglicht sowohl die mengenmäßige als auch die chemische Analyse der einzelnen Blutbestanteile. Eine vorherige Behandlung der Blutprobe (Probenvorbereitung) ist nur bedingt notwendig. Das trägt ebenso zur Zeitersparnis bei wie der Umstand, dass die Untersuchungsergebnisse relativ schnell erhältlich sind. Hinzu kommt, dass keine chemische Veränderung des Blutes notwendig ist. Insgesamt tragen alle genannten Vorteile dazu bei, dass die Methode auch über einen längeren Zeitraum und bei hoher Frequentierung bei geschlossenem Kältemittelkreislauf als sehr wirtschaftlich anzusehen ist.

Weitere Einzelheiten, Merkmale und Vorteile der Erfindung ergeben sich aus der nachfolgenden Beschreibung der Ausführungsbeispiele I bis III mit Bezugnahme auf die zugehörige Zeichnungen. Es zeigen:
- **Fig. 1a:**: eine vereinfachte Darstellung der Messvorrichtung,
- **Fig. 1b:**: ein vereinfachtes Prinzip der Messvorrichtung für Messungen bei Raumtemperatur und bei tiefen Temperaturen,
- **Fig. 1c:**: die Messvorrichtung mit Kompressor und Auswertungseinheit,
- **Fig.2:**: die Fluoreszenzantwort von Glukose bei Bestrahlung mit Laserlicht der Wellenlänge 266 nm unter variierenden Temperaturbedingungen,
- **Fig. 3:**: die Fluoreszenzantwort von "Low Density Lipoprotein" (LDL) bei Bestrahlung mit Laserlicht der Wellenlänge 266 nm unter variierenden Temperaturbedingungen,
- **Fig. 4:**: die Fluoreszenzantwort von Laktat bei Bestrahlung mit Laserlicht der Wellenlänge 266 nm unter variierenden Temperaturbedingungen,
- **Fig. 5:**: die Fluoreszenzantwort von Pyruvat bei Bestrahlung mit Laserlicht der Wellenlänge 266 nm unter variierenden Temperaturbedingungen.

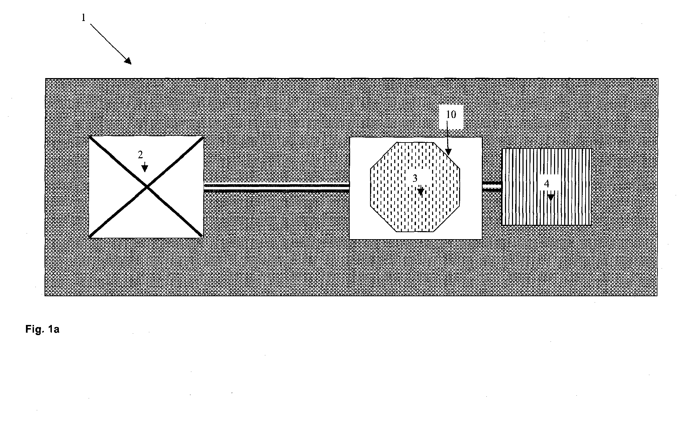

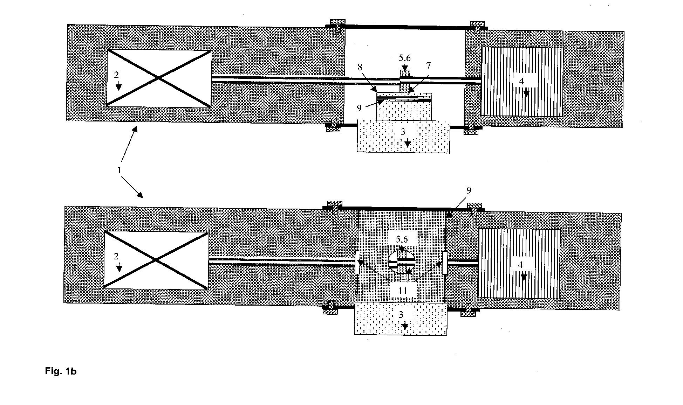

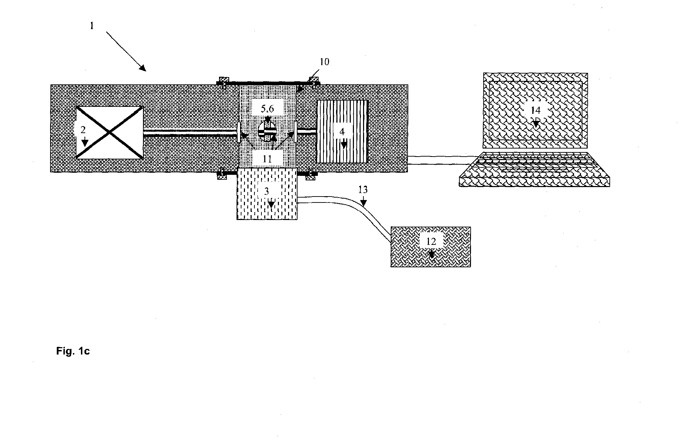

Die **Fig. 1a** zeigt eine vereinfachte Darstellung der Messvorrichtung 1. Die **Fig. 1b** zeigt ein vereinfachtes Prinzip der Messvorrichtung 1 für Messungen bei Raumtemperatur und bei tiefen Temperaturen. Zur Untersuchung einer Körperflüssigkeitsprobe mit dem hier beschriebenen Verfahren müssen dem Patienten in einem ersten Schritt etwa zwei Milliliter der zu untersuchenden Körperflüssigkeit entnommen werden. Im Folgenden wird diese Körperflüssigkeitsprobe 5 in eine UV-gängige temperaturstabile Küvette 6 verbracht. Die Küvette 6 wird samt Inhalt in eine kombinierte Apparatur, im Wesentlichen bestehend aus einer Lichtquelle 2, einem Kryostaten 3 und aus einem Fluoreszenzspektrographen mit Bildgebungsdetektor 4, verbracht. Dabei wird in den **Figuren 1a****,** **1b** und **1c** jeweils nur eine mögliche Anordnung dargestellt.

Als Lichtquelle 2 können für die jeweiligen Untersuchungen je nach gewünschter Zielstellung breitbandige Lichtquellen 2, wie zum Beispiel Quecksilberdampflampen, Xenon-Hochdruck-Lampen, Deuterium-Lampen oder schmalbandige Lichtquellen 2, wie zum Beispiel LEDs und Laser (Titanium: Sapphire, Diodenlaser, Farbstofflaser unter anderen), eingesetzt werden. Beide Typen von Lichtquellen 2 bieten für verschiedene Anwendungen ihre Vorteile. Breitbandige Lichtquellen 2 bieten aufgrund ihrer Vielzahl von Wellenlängen eine bessere Möglichkeit, viele verschiedene Bestandteile der Körperflüssigkeitsprobe 5 gleichzeitig zu detektieren. Schmalbandige Lichtquellen 2 können aufgrund der Lichtemission über einen geringen Wellenlängenbereich gezielt zur Anregung spezifischer Probenbestandteile 5 eingesetzt werden. Der Nachteil des Einsatzes dieser schmalbandigen Lichtquellen 2 besteht jedoch darin, dass aufgrund verschiedener Absorptionsmaxima der Inhaltsstoffe der Körperflüssigkeitsprobe 5 mit solch einer Lichtquelle 2 nicht alle Inhaltsstoffe zum Fluoreszieren angeregt werden. Eine Erhöhung der Vielfalt der mit einer schmalbandigen Lichtquelle 2 innerhalb der Körperflüssigkeitsprobe 5 angeregten Stoffe kann aufgrund der Erhöhung der eingestrahlten Lichtenergie, wie es zum Beispiel durch den Einsatz von Lasern geboten wird, erfolgen. Um jedoch das ganze Spektrum an möglichen Fluoreszenzen innerhalb der Körperflüssigkeitsprobe 5 abdecken zu können, muss die Messvorrichtung 1 auch bei Einsatz von Lasern mit mehreren Lichtquellen unterschiedlicher Wellenlängen bestückt werden.

Der Kryostat 3 erfüllt in der vorliegenden Anordnung sowohl die Funktion der Temperatursteuerung der Körperflüssigkeitsprobe 5 als auch die Funktion der Probenhalterung 7 beziehungsweise der Probenmesszelle 7. Nach Einbringen der UV-gängigen temperaturstabilen Küvette 6 in die Probenhalterung 7, welche direkt mit dem Wärmeübertrager 8 und einer Heizung 9 zur Regulation der Temperatur der Körperflüssigkeitsprobe 5 verbunden ist, wird die Körperflüssigkeitsprobe 5 auf eine gewünschte Untersuchungstemperatur abgekühlt und bei dieser Temperatur für einige Zeit, je nach Probenbeschaffenheit, temperiert. Verschiedene Messungen zeigen hierbei, dass die optimale Kühltemperatur zwischen 150 K und 4 K liegt, wobei auch vereinzelt, wie bei "Low Density Lipoprotein" (LDL), in einer Blutprobe bereits bei 200 K auswertbare Fluoreszenzen detektierbar sind. Die Kryostatenwandung 10, welche die Probenmesszelle 7 nach außen hin abschließt und damit einen Wärmeaustausch mit der Lichtquelle 2 und dem Fluoreszenzspektrographen 4 verhindert, ist durch mindestens zwei um 90° zueinander versetzte UV-gängige Fenster 11, zum Beispiel Suprasil®-Quarzglas, charakterisiert.
Zur Probenkühlung kann für die beschriebene Methode jegliche Art von bekannten Kälteerzeugern, die zum Beispiel auf der Grundlage der

Verdampfertechnik, Refrigeratortechnik oder Puls-Tube-Technik funktionieren, eingesetzt werden, wobei sich die Handhabung des Gesamtsystems und die Wirtschaftlichkeit bei Kryostaten 3 mit geschlossenem Kältemittelkreislauf gegenüber denen mit offenen Kältemittelkreislauf besser darstellt. Als Kältemittel können Helium, Stickstoff oder Kältemittelgemische fungieren, wobei aufgrund der benötigten sehr niedrigen Temperaturen der Einsatz von Helium als bevorzugt gilt. Das Kältemittel kann, wie in **Fig. 1c** dargestellt, mit Hilfe verschiedener Pumpen und Kompressoren 12 über ein flexibles Schlauchsystem 13 zum Wärmeübertrager 8 transportiert werden. Die zur Messung in der Probenkammer auf Untersuchungstemperatur temperierte Körperflüssigkeitsprobe 5 wird anschließend innerhalb des Kryostaten 3 mit Hilfe der Lichtquelle 2 über eines der UV-gängigen Fenster 11 illuminiert. Die dabei durch die Bestrahlung erzeugten Fluoreszenzemissionen der Probenbestandteile 5 werden über eines der weiteren Fenster aus der Probenkammer herausgeführt, im Fluoreszenzspektrographen 4 spektral zerlegt und anschließend detektiert. Als Bildgebungsdetektor 4 können hierbei verschiedene Photomultiplier (PMT), Pin-Photodioden, Avalanche-Photodioden oder Charge-Coupled-Device (CCD)- Kameras eingesetzt werden.
Die Auswertung der so gewonnenen Fluoreszenzdaten erfolgt mit Hilfe einer speziellen Software über einen Computer 14 als Auswertungseinheit 14. Mit Hilfe dieser Software ist es möglich, die gewonnenen Daten zu normieren, numerisch und graphisch darzustellen, deren wichtigste Charakteristika auszuwerten und anschließend mit einer Datenbank von Werten für gesunde Probanden im Normalzustand (das heißt: keinerlei Form von Stress) zu vergleichen. Dabei werden sowohl statische Fluoreszenzdaten als auch dynamische Fluoreszenzdaten verglichen. Als wichtige Vergleichscharakteristika sind die Intensität der Fluoreszenz, die Fläche unterhalb einer Fluoreszenzbande, die Lage der einzelnen Fluoreszenzbandenmaxima im Gesamtspektrum, das Verhältnis verschiedener Bandenmaxima innerhalb eines Spektrums zueinander, die Quantenausbeute der Körperflüssigkeitsprobe 5 und die Lebensdauer der Fluoreszenz (Time-Domain; Frequency-Domain) heranzuziehen. Veränderungen in der Intensität zum Beispiel deuten dabei auf Störungen im Stoffwechsel hin. Verschiebungen der Emissionsmaxima und Änderungen der Fluoreszenzlebensdauern weisen auf unterschiedliche chemische Umgebungen des Fluorophors innerhalb der Körperflüssigkeitsprobe 5 hin. Auf Grundlage der verschiedenen Fluoreszenzlebensdauern ist es mit dieser Auswertesoftware zudem möglich, Fluoreszenzen, welche sich auf Grund chemischer Neubindungen verändert haben, nach dem Einfluss des jeweiligen Bindungspartners zu differenzieren. Dies kann vor allem in solchen Untersuchungen eine wichtige Rolle spielen, wo es ausschlaggebend ist, wie viel Fremdsubstanz sich mit dem zu analysierenden Stoff verbunden hat (siehe Beispiel Diabetes).

### I. Einsatz in der Früherkennung von Diabetes und deren Folgeerscheinungen

Wie bereits in den Ausführungen zum Stand der Technik beschrieben, stellen Diabetes-Typ-2 und deren Begleit- und Folgeerscheinungen ein wichtiges und immer häufiger auftretendes Gesundheitsrisiko im Alltag des Menschen dar. Eine Methode zur einfachen Bestimmung, ob es sich bei einem Probanden um einen Diabetes-Typ-2-Risikopatienten handelt, wird nach dem heutigen Stand der Technik noch nicht gegeben. Mit der vorliegenden Erfindung soll eine Möglichkeit gegeben werden, die Gefahr der Ausprägung eines Patienten zur Diabetes-Typ-2 rechtzeitig zu erkennen und Vorbeugemaßnahmen einzuleiten, um die Krankheit und deren Begleit- und Folgeerscheinungen zu verhindern.

Zur Bestimmung des Diabetes-Typ-2-Risikos mit dem hier vorliegenden Verfahren kann der Patient eine Person sein, bei der ein erhöhtes Diabetes-Typ-2-Risiko vermutet wird, eine Person, die bereits Symptome vom Diabetes-Typ-2 aufweist oder eine asymptomatische Person sein. Dem Patienten muss vom untersuchenden Arzt etwa zwei Milliliter Körperflüssigkeit abgenommen werden. Dies kann in Form von zum Beispiel Blut, Urin und/oder Schweiß geschehen, wobei für die vorliegende Methode Blut bevorzugt verwendet werden sollte. Anschließend wird die genommene Körperflüssigkeitsprobe der Körperflüssigkeit auf verschiedene Anzeichen einer Insulinresistenz untersucht. Als Insulinresistenz wird das Scheitern des Körpers bezeichnet, normal auf Insulin zu reagieren. Das Insulinresistenzsyndrom ist oftmals ein Vorläufer von Typ-2-Diabetes und bezieht sich auf eine Menge von mit Insulinresistenz zusammenhängenden medizinischen Zuständen, bei denen hohe Blutzuckerspiegel die Produktion von Insulin stimulieren. Wenn der Patient nicht mehr in der Lage ist, überschüssiges Insulin normal zu verarbeiten, steigen die Insulinspiegel an. Dies führt dazu, dass der Patient letztendlich hohe Blutzuckerspiegel (Hypergykämie) und hohe Insulinspiegel (Hyperinsulämie) aufweist. Solche Bedingungen bewirken, dass das Insulin seine Fähigkeit, den Fettstoffwechsel zu regulieren, einbüßt. Dabei entstehende überschüssige Fette treten in den Blutstrom ein (Hyperlipidämie) und tragen zu Bluthochdruck, Herzerkrankung und Schlaganfall bei. Die Körperflüssigkeitsprobe kann somit auf verschiedene Substanzen untersucht werden, die als typische Indikatoren eines erhöhten Risikos der Erkrankung an Diabetes-Typ-2 geeignet sind. Im Blut wären zum Beispiel Untersuchungen des Blutzuckerspiegels, des Insulinspiegels, des Spiegels an Lipoproteinen (LDL = Low Density Lipoproteine; HDL = High Density Lipoproteine; Lipoprotein a), des Spiegels an Homocystein, des Langzeitblutzuckerwertes (HbA1c) und des Gehaltes an Fibrinogen als Risikountersuchungen durchführbar. Urin könnte in solch einer Untersuchung ebenfalls auf den Zuckergehalt, aber auch auf weitere Faktoren, wie zum Beispiel Aceton oder Albumin (Mikroalbuminurie), untersucht werden.

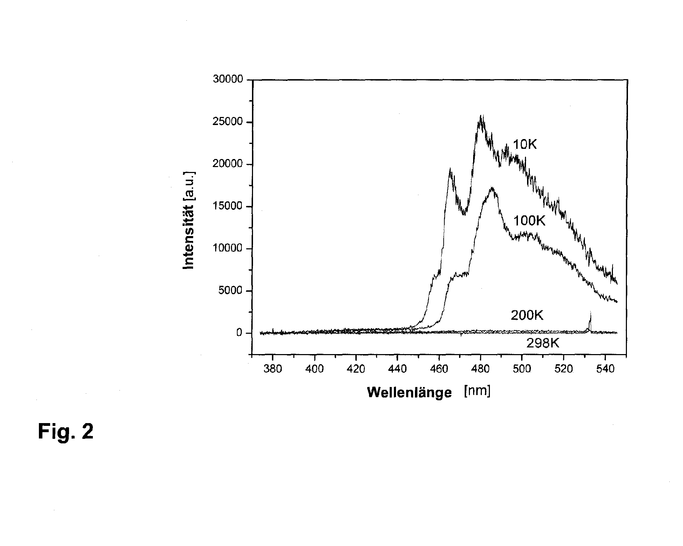

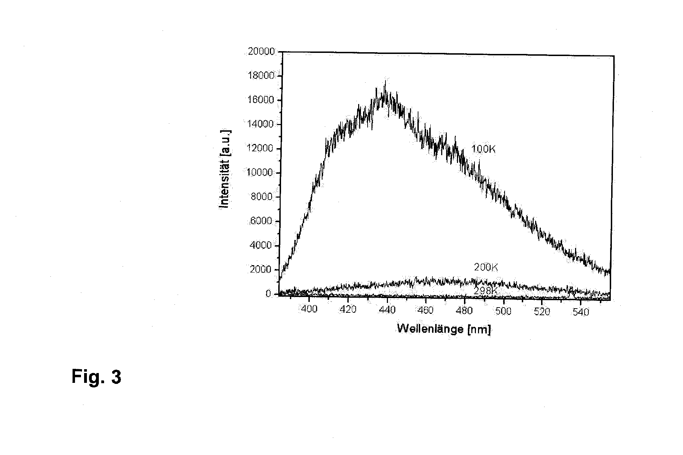

Die entnommene Körperflüssigkeitsprobe 5 wird im folgenden Schritt deutlich herabgekühlt (Temperaturen zwischen 200 K und 4 K), mit Licht von geeigneter Wellenlänge bestrahlt und das resultierende Fluoreszenzspektrum wird aufgenommen. Als Beispiel seien in dieser Schrift die nach der genannten Vorgehensweise generierten Fluoreszenzspektren der relevanten Diabetes-Typ-2-Indikatoren Glukose und Low Density Lipoprotein [LDL] angeführt. Beide Indikatoren wurden innerhalb des Ausführungsbeispiels bei Bestrahlung mit Laserlicht der Wellenlänge 266 nm unter variierenden Temperaturbedingungen untersucht. In den **Figuren 2** und **3** werden Spektren von relevanten Diabetes-Typ-2-Indikatoren (Spektrum Glukose, Spektrum "Low Density Lipoprotein" [LDL]) bei unterschiedlichen Temperaturen und ansonsten gleichen Bedingungen gezeigt. Dabei ist zu erkennen, dass die Intensität des Fluoreszenzsignals für beide Stoffe in **Fig. 2** und **Fig. 3** mit sinkender Temperatur steigt. Für beide Indikatoren wurden die Rahmenbedingungen während der Messungen konstant gehalten. Lediglich die Untersuchungstemperatur wurde variiert. Glukose zeigt gemäß **Fig. 2** unter gewählten Rahmenbedingungen keine Fluoreszenz bei Raumtemperatur. Bei einer Temperatur der Körperflüssigkeitsprobe 5 von 100 K konnte ein deutliches Fluoreszenzsignal der Glukose beobachtet werden, welches bei weiterer Verminderung der Temperatur auf 10 K an Intensität und an Struktureigenschaften zunahm. Somit konnte zwar bereits bei Temperaturen von etwa 100 K ein auswertbares Glukosespektrum gewonnen werden, aufgrund der deutlich besseren Feinstrukturierung des Spektrums ist die Messung bei 10 K jedoch leichter zu interpretieren. Auch "Low Density Lipoprotein" [LDL] zeigte, wie in **Fig. 3** zu sehen ist, bei Raumtemperatur unter den gewählten Bedingungen keine Fluoreszenzantwort. Mit sinkender Temperatur zeigte sich jedoch ein deutlich interpretierbares Fluoreszenzsignal. Anders als bei den Untersuchungen an Glukose konnte für "Low Density Lipoprotein" [LDL] bereits ab einer Temperatur von 200 K ein gut auswertbares Fluoreszenzsignal gemessen werden, welches sich auch bei weiterer Verringerung der Temperatur nicht nochmals deutlich veränderte. Neben dem in den **Figuren 2** und **3** dargestellten Verlauf der Intensität gegen die Wellenlänge, stellt die Lebensdauer der Fluoreszenz ein wichtiges Kriterium zur Charakterisierung der einzelnen untersuchten Indikatorsubstanzen. Auch die Fluoreszenzlebensdauer ist spezifisch und stark von der Umgebungstemperatur während der Messung abhängig. Zur Auswertung werden die gewonnen Daten der jeweiligen Indikatoren nach der Messung normiert und deren charakteristische Werte mit tabellierten Werten von gesunden, subhyperglykämischen Patienten mittels einer Auswertesoftware verglichen. Zusätzlich zu den allgemeinen Vergleichskriterien ist es bei der Untersuchung von Indikatoren zur Diabetes-Typ-2 unter Einbeziehung der verschiedenen Fluoreszenzlebensdauern möglich, verschiedene chemische Umgebungen (wie zum Beispiel verschiedene Glycatierungsgrade von Hämoglobin [HbA1 c-Wert]) der zu untersuchenden Substanz voneinander zu trennen und zu charakterisieren.

Die vorliegende Erfindung bildet somit die analytische Basis zur Früherkennung des Risikos, Typ 2-Diabetes zu entwickeln, dadurch, dass ein auf fluoreszenzspektroskopischer Analyse basierender Test auf Glukosespiegel gleichzeitig mit einem oder mehreren auf fluoreszenzspektroskopischer Analyse basierenden Tests zum Bewerten weiterer Risikofaktoren, zum Beispiel von Blutproteinwerten, durchgeführt werden kann. Je nach Ausführung der Messvorrichtung 1 ist es mit dieser Methode somit möglich, mindestens zwei, jedoch auch deutlich mehr relevante Diabetes-Typ-2-Indikatoren innerhalb einer Probe und innerhalb eines Messganges zu charakterisieren und auszuwerten. Aufgrund der Tatsache, dass die Detektion von lediglich einem der indikativen Parameter zumeist auch von anderen Umgebungsprozessen beeinflusst sein kann, stellt die hier vorliegende Möglichkeit der Detektion von verschiedenen Parametern eine deutliche Verbesserung der Risikoabschätzung dar.

### II. Laktatbestimmung in der Leistungsdiagnostik

Interessante Ergebnisse können mit Hilfe dieses Verfahrens auch im Gebiet der sportlichen Leistungsdiagnostik über die Ermittlung der Laktatwerte gewonnen werden. Laktat ist das Salz der Milchsäure und stellt das Endprodukt des anaeroben Glukose-Stoffwechsels dar. Steht dem Körper aufgrund verschiedener Belastungssituationen nicht genug Sauerstoff für einen aeroben Stoffwechsel zur Verfügung, wird Energie durch anaerobe Glykolyse bereitgestellt, bei der als Abbauprodukt Milchsäure entsteht, die sich im Blut anreichert. Diese Anreicherung bewirkt einen Anstieg des Blutlaktatwertes. Erhöhte Laktatspiegel sind somit in der Regel ein Indiz dafür, dass einzelne Bereiche des Körpers unzureichend mit Sauerstoff versorgt werden. Aus diesem Grund stellt Laktat den wichtigsten Indikator zur Beurteilung der körperlichen Leistungsfähigkeit dar. Die Bestimmung des Blutlaktatwertes wird im Leistungs- und Breitensport zur Trainingssteuerung eingesetzt. Bei körperlicher Betätigung steigt die Laktatkonzentration im Blut an. Durch die Erstellung einer Laktatleistungskurve (Laktatkonzentration in Abhängigkeit von der Belastungsstufe) kann der Trainingszustand eines Sportlers beurteilt werden. Je später dabei der Laktatwert aufgrund der Belastung ansteigt, umso besser ist der Trainingszustand des Probanden. Zur Bestimmung der Laktatkonzentration im Blut des Probanden mit Hilfe des vorliegenden Verfahrens muss diesem etwa zwei Milliliter Blut abgenommen werden. Die entnommene Blutprobe 5 wird anschließend auf Temperaturen zwischen 200 K und 4 K herabgekühlt und mit Licht von geeigneter Wellenlänge bestrahlt. Anschließend wird das resultierende Fluoreszenzspektrum aufgenommen.

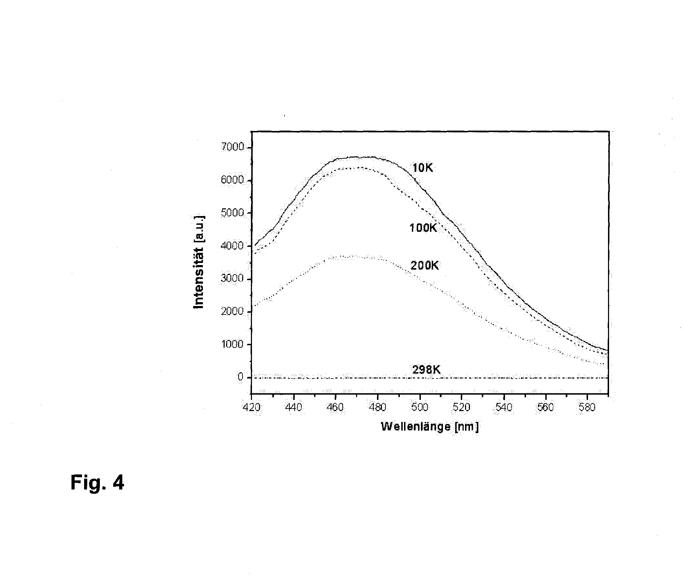

**Fig. 4** zeigt als Beispiel die Fluoreszenz von Laktat bei Anregung mit Laserlicht der Wellenlänge 266 nm unter variierenden Temperaturbedingungen. Aus den Maxima der verschiedenen Spektren ist hierbei deutlich zu erkennen, dass sich die Empfindlichkeit der Detektion gegenüber Laktat durch den Einsatz der hier beschriebenen Methode des Herabkühlens der Probe 5 deutlich steigert. Bei Messungen unter Raumtemperaturbedingungen konnte für die in diesem Versuch gewählten Einstellungen keine Eigenfluoreszenz des Laktats gemessen werden. Mit Verminderung der Temperatur auf 200 K ist bereits ein deutlich auswertbares Spektrum für Laktat zu erkennen, welches sich bei weiterer Verminderung der Temperatur auf 100 K und 10 K nochmals steigert. Der **Fig. 4** ist zu entnehmen, dass durch Temperaturverminderung von 200 K auf 100 K ein sehr großer Einfluss auf die Fluoreszenzintensität vorherrscht, wohingegen die Verminderung von 100 K auf 10 K einen vergleichsweise geringeren Einfluss auf die Intensität ausübt. Die gewonnenen Fluoreszenzdaten des Laktats werden normiert und deren charakteristische Daten, wie zum Beispiel die Lage der Bandenmaxima, Intensität der Fluoreszenz, Verhältnis verschiedener Bandenmaxima zueinander sowie die Lebensdauer der Fluoreszenz, mit tabellierten Werten vor der Belastung verglichen und ausgewertet.

### III. Einsatz in der Erkennung von mitochondrialen Funktionsstörungen

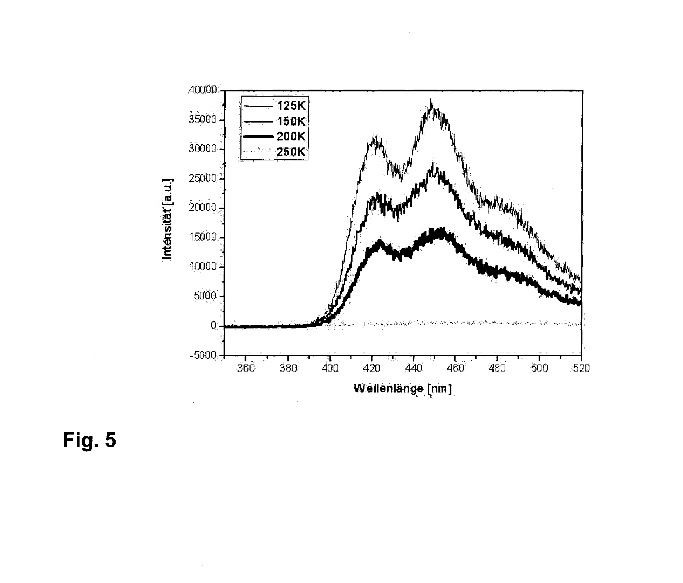

Mitochondriale Funktionsstörungen stellen eine der Hauptursachen für menschliche, neurodegenerative und neurometabolische Erkrankungen dar. Als Erkrankungen der Mitochondrien (Mitochondropathie) werden im engeren Sinne alle Störungen von Enzymen zusammengefasst, die an der Energiegewinnung der Zellen beteiligt sind. Geschädigte Mitochondrien bilden Stickstoffmonoxid. Dieses Stickstoffmonoxid hemmt die Energiebildung in den Mitochondrien, und zwar organübergreifend. Die betroffenen Zellen geraten damit in ein chronisches Energiedefizit, sind somit leichter erschöpfbar und benötigen immer längere Ruhezeiten. Ein charakteristischer Befund, welcher stark auf eine Mitochondrienschädigung hinweist, ist ein sehr hohes Verhältnis von Milch- zu Brenztraubensäure (Laktat zu Pyruvat). Pyruvat ist das Salz der Brenztraubensäure und stellt das Kernprodukt der Glykolyse dar. Bei starker körperlicher Belastung ist die Glykolyse zur zusätzlichen Energiegewinnung um ein Vielfaches erhöht, was eine gesteigerte Pyruvat-Synthese zur Folge hat. Der Überschuss an Pyruvat kann im Zitronensäurezyklus jedoch nicht vollständig verarbeitet werden, so dass das überschüssige Pyruvat in Laktat umgewandelt wird. Somit steht ein verminderter Pyruvatgehalt im Blut meist mit Abbaustörungen im Kohlenhydratstoffwechsel im Zusammenhang. Die Vorgehensweise bei der Blutanalyse unterscheidet sich bei der Untersuchung des Laktat/Pyruvat-Verhältnisses nicht von denen der oben genannten Beispiele. Auch für diese Untersuchung müssen dem Probanden in einem ersten Schritt etwa zwei Milliliter Körperflüssigkeit (Blut) entnommen werden, welche anschließend in eine Messküvette 6 verbracht und innerhalb der Messvorrichtung 1 auf 200 K bis 10 K abgekühlt wird. Im Folgenden wird die gefrorene Probe 5 mit Licht bestrahlt und die daraus resultierende Fluoreszenz wird vom Messsystem abgegriffen. Dass die Fluoreszenz in Abhängigkeit von der Verminderung der Temperatur im Falle des Laktat detektierbar ist, wurde bereits im Beispiel der Bestimmung des Laktatwertes gezeigt. Die **Fig. 5** zeigt ein Beispiel für die Fluoreszenzemission von Pyruvat unter verschiedenen Temperaturbedingungen. Für den hier gezeigten Versuch wurde die Probe 5 mit Laserlicht der Wellenlänge 266 nm zum Fluoreszieren angeregt. Es ist hier sehr gut zu erkennen, dass Pyruvat unter diesen Bedingungen auch bei 250 K noch keine Fluoreszenz zeigte. Ein erstens auswertbares Spektrum konnte innerhalb dieser Versuche bei etwa 200 K gemessen werden. Eine weitere Verminderung der Temperatur führte auch bei Pyruvate zu Steigerungen der Fluoreszenzintensität und besseren Auflösungen in der Spektrenstruktur. Ab einer Temperatur von 125 K konnte bei diesen Untersuchungen ein Spektrum detektiert werden, welches auch bei weiterer Verminderung der Temperatur nicht merklich verbessert werden konnte. Die auf diese Weise gewonnenen Fluoreszenzdaten von Laktat und Pyruvat werden normiert und deren charakteristische Daten, zum Beispiel die Lage der Bandenmaxima, die Intensität der Fluoreszenz, das Verhältnis verschiedener Bandenmaxima zueinander, die Lebensdauer der Fluoreszenz, mit tabellierten Werten der Probanden vor der Belastung verglichen und ausgewertet. Zudem müssen die gewonnenen Fluoreszenzdaten von Pyruvat und Laktat in einem weiteren Schritt für die Auswertung zueinander ins Verhältnis gesetzt werden.

Zusammenfassend kann für alle drei der hier beschriebenen Einsatzbeispiele gezeigt werden, dass die beschriebene Methode beim Einsatz in diesen Untersuchungsfeldern einen deutlichen Wissensvorteil bringt. Zudem zeigt sich hier, dass alle drei Beispieluntersuchungen mittels einer Methode durchgeführt werden konnten. Da die gewählten Beispiele alle zumindest zum Teil auf Daten beruhen, die aus einer Blutanalyse gewonnen wurden, ist es mit dieser Methode sogar theoretisch möglich, diese Untersuchungen quasi parallel an einer Körperflüssigkeitsprobe für einen Probanden durchzuführen. Die Untersuchung weiterer Indikatoren aus Körperflüssigkeiten, welche auf andere Krankheitsbilder hindeuten, ist mit dieser Methode ebenfalls denkbar. Hierbei ist jedoch, wie bereits erwähnt, darauf zu achten, dass nicht alle der gewählten Indikatoren optimal mit ein und derselben Wellenlänge zum Fluoreszieren anzuregen sind. Somit muss bei der Auslegung der Messvorrichtung 1 darauf geachtet werden, zum Teil auch verschiedene Lichtquellen in den Messvorgang einzubinden.

### LISTE DER BEZUGSZEICHEN

- 1: Messvorrichtung
- 2: Lichtquelle
- 3: Kryostat
- 4: Fluoreszenzspektrograph, Bildgebungsdetektor
- 5: Probe, Körperflüssigkeitsprobe, Probenbestandteile, Blutprobe
- 6: Küvette, Messküvette
- 7: Probenmesszelle, Probenhalterung
- 8: Wärmeübertrager
- 9: Heizung
- 10: Kryostatenwandung
- 11: UV-gängige Fenster
- 12: Kompressoren
- 13: Schlauchsystem
- 14: Computer, Auswertungseinheit

## Patentansprüche

1. Verfahren zur qualitativen und quantitativen Analyse von Körperflüssigkeiten, insbesondere von Blut, Urin oder Schweiß, wobei zur Untersuchung der Körperflüssigkeiten fluoreszenzspektroskopische Methoden eingesetzt werden, mit den Verfahrensschritten a) bis e):
a) Temperierung der Körperflüssigkeitsprobe (5) bei Temperaturen zwischen 200 K und 4 K in einem Kryostat (3);
b) Bestrahlung und Anregung der Körperflüssigkeitsprobe (5) mit Licht im UV-, sichtbaren oder infraroten Bereich bei Temperaturen zwischen 200 K und 4 K, wobei der Kryostat (3) sowohl die Funktion der Temperatursteuerung der Körperflüssigkeitsprobe (5) als auch die Funktion einer Probenhalterung (7) und einer Probenmesszelle (7) erfüllt, indem die Probenmesszelle (7) im Kryostat (3) angeordnet und durch eine Kryostatenwandung (10) nach außen hin abgeschlossen ist und dabei direkt mit einem Wärmeübertrager (8) des Kryostaten (3) thermisch kontaktiert;
c) spektrale Zerlegung der entstehenden Fluoreszenzstrahlung der Körperflüssigkeitsprobe (5) in einzelne Fluoreszenzsignale;
d) Detektierung der Fluoreszenzsignale und
e) Gegenüberstellung der gewonnenen Fluoreszenzsignale und von entsprechenden Vergleichsdaten und Auswertung.

2. Verfahren nach Anspruch 1, **dadurch gekennzeichnet, dass** die Temperierung der Körperflüssigkeitsprobe (5) in Verfahrensschritt a) auf Temperaturen zwischen 150 K und 4 K erfolgt.

3. Verfahren nach einem der Anspruch 1 oder 2, **dadurch gekennzeichnet, dass** die Bestrahlung der Körperflüssigkeitsprobe (5) in Verfahrensschritt b) mit mehreren unterschiedlichen Wellenlängen zum Teil auch gleichzeitig erfolgt.

4. Verfahren nach einem der Ansprüche 1 bis 3, **dadurch gekennzeichnet, dass** die Detektion gemäß Verfahrensschritt d) der Fluoreszenzsignale von verschiedenen Bestandteilen der Körperflüssigkeitsprobe (5) gleichzeitig erfolgt.

5. Verfahren nach Anspruch 4, **dadurch gekennzeichnet, dass** bei der Analyse von Blutbestandteilen gleichzeitig mindestens zwei der Indikatoren Blutzuckerspiegel, Insulinspiegel, Spiegel an Lipoproteinen, Spiegel an Homocystein, Langzeitblutzuckerwert (HbA1 c), der Gehalt an Fibrinogen und Blutproteinwerte gemessen werden, wobei bei der Bestimmung des Laktat-/Pyruvatverhältnisses die Messungen der Fluoreszenzsignale von Laktat und Pyruvat gleichzeitig erfolgen.

6. Verfahren nach Anspruch 4, **dadurch gekennzeichnet, dass** bei der Analyse von Urinbestandteilen die Messungen des Zuckergehaltes, des Gehaltes an Aceton und/oder Albumin erfolgen.

7. Verfahren nach einem der Ansprüche 1 bis 6, **dadurch gekennzeichnet, dass** für die Gegenüberstellung der gewonnenen Fluoreszenzsignale und der Vergleichsdaten in Schritt e) als Vergleichscharakteristika die Intensität der Fluoreszenz, die Fläche unterhalb einer Fluoreszenzbande, die Lage der einzelnen Fluoreszenzbandenmaxima im Gesamtspektrum, das Verhältnis verschiedener Bandenmaxima innerhalb eines Spektrums zueinander, die Quantenausbeute der Körperflüssigkeitsprobe (5) und die Lebensdauer der Fluoreszenz der einzelnen Fluorophore vorgesehen sind.

8. Messvorrichtung für die Durchführung von Verfahren nach einem der Ansprüche 1 bis 7, umfassend
• eine Lichtquelle (2) für die Anregung der Körperflüssigkeitsprobe (5),
• einen Kryostaten (3) für das Temperieren der Körperflüssigkeitsprobe (5),
• einen Fluoreszenzspektrographen (4) für das Zerlegen der gewonnenen Fluoreszenzstrahlung der Körperflüssigkeitsprobe (5),
• einen Bildgebungsdetektor (4),
• eine Probenmesszelle (7), die gleichzeitig als Probenhalterung (7) dient und im Kryostat (3) angeordnet ist, wobei sie durch eine Kryostatenwandung (10) nach außen hin abgeschlossen ist und direkt mit einem Wärmeübertrager (8) des Kryostaten (3) thermisch kontaktiert, und
• eine UV-gängige, temperaturstabile Küvette (6), mit der die Körperflüssigkeitsprobe (5) in die Probenmesszelle (7) eingeführt wird.

9. Messvorrichtung nach Anspruch 8, **dadurch gekennzeichnet, dass** die Lichtquelle (2), der Kryostat (3) zum Temperieren der Körperflüssigkeitsprobe (5), der Fluoreszenzpektrograph (4) und der Bildgebungsdetektor (4) innerhalb einer kompakten Messvorrichtung (1) angeordnet sind.

10. Messvorrichtung nach Anspruch 8 oder 9, **dadurch gekennzeichnet, dass** die Kryostatenwandung (10), welche die Probenmesszelle (7) nach außen hin abschließt, zwei um 90° zueinander versetzte UV-gängige Fenster (11) aufweist.

11. Messvorrichtung nach einem der Ansprüche 8 bis 10, **dadurch gekennzeichnet, dass** die Lichtquelle (2), welche für die Anregung der gefrorenen Körperflüssigkeitsprobe (5) verwendet wird, als breitbandige Lichtquelle, insbesondere in Form einer Quecksilberdampflampe, einer Xenon-Hochdruck-Lampe oder einer Deuterium-Lampe, ausgebildet ist.

12. Messvorrichtung nach einem der Ansprüche 8 bis 10, **dadurch gekennzeichnet, dass** die Lichtquelle (2), welche für die Anregung der gefrorenen Körperflüssigkeitsprobe (5) verwendet wird, als schmalbandige Lichtquelle ausgebildet ist.

13. Messvorrichtung nach Anspruch 12, **dadurch gekennzeichnet, dass** in der Messvorrichtung mehrere Lichtquellen (2) unterschiedlicher Wellenlängen vorgesehen sind.

14. Messvorrichtung nach einem der Ansprüche 8 bis 13, **dadurch gekennzeichnet, dass** der Kryostat (3) einen geschlossenen Kältemittelkreislauf aufweist, wobei als Kältemittel Helium, Stickstoff oder Kältemittelgemische vorgesehen sind.

15. Messvorrichtung nach einem der Ansprüche 8 bis 14, **dadurch gekennzeichnet, dass** die Probenmesszelle (7) direkt mit einer Heizung (9) zur Regulation der Temperatur der Körperflüssigkeitsprobe (5) thermisch kontaktiert.
